# EUROPEAN PATENT SPECIFICATION

(11) **EP 0 430 424 B1**
(45) Date of publication and mention of the grant of the patent: **23.02.1994**
(21) Application number: 90311553.3
(22) Date of filing: 22.10.1990
(51) Int. Cl.: C09D 7/12, C09D 5/38

(54) **Film-forming compositions**
Filmbildende Zusammensetzungen
Compositions filmogènes

(30) Priority: 17.11.1989 GB 8926031
(43) Date of publication of application: 05.06.1991
(73) Proprietor: TIOXIDE GROUP LIMITED, London W14 0QL (GB)
(72) Inventor: Meldrum, Brian John, Stockton On Tees, Cleveland (GB)
(74) Representative: Jackson, John Derek

(56) References cited:
- EP-A- 0 078 633
- CA-A- 2 013 224
- US-A- 4 526 910
- US-A- 4 937 274

## Description

This invention relates to film-forming compositions and particularly to film-forming compositions having new and different optical effects.

According to the present invention a film-forming coating composition comprises a film-forming polymer, a liquid dispersion medium, a metallic or metallic-like pigment and from 0.5 to 10 per cent by weight of the composition of a particulate material comprising particles of titanium dioxide having an average size of from 0.01 to 0.15 micron, at least 80 per cent by weight of said particles having a size within the range 0.01 to 0.15 micron and said particles having a coating of dense amorphous silica.

The products of the present invention have interesting appearances of differing effects when the compositions also contain pigments such as opacifying pigments as well as metallic pigments in differing amounts. The compositions can be used to form coatings exhibiting downflop and those with opalescent appearance. Coatings with high chromaticity are also attainable.

Any type of film-forming composition is included herein such as those to be used as exterior or interior coatings, industrial paints or other protective coatings. Accordingly appropriate film-forming polymers are used for a particular type of paint or coating composition. However the film-forming compositions which are of most interest are those to be used to coat industrial articles such as automobiles which are required to provide a durable protective surface and also interesting and attractive optical effects.

Of particular interest are the compositions which are to be used to paint automobiles which have the combination of properties described hereinbefore.

Typical metallic pigments are metal flake, and metal coated particles such as aluminium flake, stainless steel flake, silver flake, gold flake and bronze flake. Metallic-like pigments which can be used are typically metal oxide coated particles such as coated mica particles. Examples of coated particles are mica particles coated with ferric oxide, alumina, titania and chromium oxides or hydroxides.

In addition to the said particulate material and the metallic pigment or metallic-like pigments the coating composition can include one or more other pigments or dyes such as those required to give opacity and/or colour to the composition. Any conventional pigment used in coating compositions can be used in the present invention such as carbon black, titanium dioxide, red iron oxide, yellow iron oxide, phthalocyanine blue and other organic dyes or pigments.

Compositions of the present invention can be used as a final top-coat paint or as an undercoat which is covered by a clear lacquer or as a lacquer itself which covers a base coating containing a metallic pigment. They can be used to coat metallic articles or other articles of glass, ceramic, paper, wood or plastics material.

The film-forming polymer can be any conventionally used resin and can be an acrylic resin, an alkyd resin, a polyester, a polyurethane, or an aminoplast resin.

Acrylic resins which can be employed are either the thermosetting resins or the thermoplastic resins. Examples of thermoplastic resins which can be used are polymers of acrylic or methacrylic acids or copolymers thereof with alkyl esters of acrylic acid or methacrylic acid or copolymers of alkyl esters of acrylic or methacrylic acid with vinyl acetate, acrylonitrile and styrene or other comonomers.

Cross-linkable carboxy-hydroxy acrylic copolymers may be used in admixture with a cross-linking agent such as a polyisocyanate, a polyepoxide or an aminoplast resin. Typical copolymers which can be used are the esters of acrylic or methacrylic acids with alcohols containing up to 12 carbon atoms. Polyurethanes are produced when polyisocyanates react with hydroxy and/or carboxylic acid groups.

Alkyd resins which include fatty acid or oil containing esterification products can be used in the compositions of the present invention. Preferably the alkyd resins are those containing about 6 to about 64% by weight of a fatty acid or oil and having a hydroxyl equivalent to carboxy equivalent ratio of about 1.05 to 1.75. The various fatty acids and oils useful in the preparation of alkyd resins are the fatty acids derived from castor oil, coconut oil, cotton seed oil, corn oil, linseed oil, safflower oil, soy bean oil and tung oil. A wide variety of polyols and acids are useful in preparing the alkyd resins in the conventional processes.

Polyester resins which can be used are those which are referred to as "oil-less" alkyd resins and these are condensation products of non-fatty polyols with polyacids. Polyalcohols such as glycols e.g. propylene glycol, ethylene glycol, butylene glycol and the like or triols e.g. trimethylol ethane, trimethylolpropane or glycerine can be reacted with acids such as phthalic acid, phthalic anhydride, isophthalic acid, maleic acid, fumaric acid or adipic acid.

Compositions of the present invention contain a particulate material comprising particles of titanium dioxide having an average size of from 0.01 to 0.15 micron and having a coating of dense amorphous silica.

The particles of titanium dioxide have an average size of from 0.01 to 0.15 micron and when spherical the diameter of the particles is preferably within the range 0.01 to 0.03 micron. The particles can be acicular in shape and in this case the largest dimension of the particles is within the range 0.01 to 0.15 microns, preferably 0.02 to 0.1 micron, and the ratio of the largest dimension, to the shortest dimension is from 8:1 to 2:1. Also while the particles have sizes within the size range hereinbefore specified they do exhibit a narrow size distribution in which at least 80 per cent by weight have a size within the range of average sizes of 0.01 to 0.15 micron.

The particles of titanium dioxide used in the compositions have a coating of dense amorphous silica. Dense amorphous silica when present in the form of a coating on the particles forms a barrier between the titanium dioxide particles and the medium in which the titanium dioxide is dispersed and reduces migration of reactive species from the particles to the medium. Dense amorphous silica is formed under controlled precipitation conditions which are described hereinafter. The particles of the present invention can be coated with widely differing amounts of dense amorphous silica but usually the amount of dense amorphous silica is at least 10 per cent by weight (expressed as SiO₂) on weight of TiO₂ and can be as much as 150 per cent by weight (as SiO₂) on weight of TiO₂. Preferably the amount of dense amorphous silica is from 20 per cent to 115 per cent by weight (expressed as SiO₂) on weight of TiO₂.

The particulate material used in the compositions of the present invention may be formed by any suitable process. Typical processes may involve hydrolysis of an appropriate titanium compound such as titanium tetrachloride or an organic or inorganic titanate or oxidation of an oxidisable titanium compound for example in the vapour state.

A typical process involves the preparation of a solution of a soluble titanium salt which is then hydrolysed to form hydrous titanium oxide. The solution can be that obtained in the so-called "sulphate" process for the manufacture of titanium dioxide pigment in which a titaniferous ore is digested with concentrated sulphuric acid and the digestion cake dissolved in water or dilute acid to produce a solution of titanyl sulphate. During the process additional process stages of classification and reduction are usually employed. Hydrolysis of the titanyl sulphate solution produces the precipitate of hydrous titania which is sometimes called "pulp". Soluble iron compounds remain in solution and after neutralisation and washing to an appropriate degree of impurity level the precipitated hydrous titania is treated to precipitate the specified coating on the particulate product. If desired the hydrous titania can be treated prior to coating with sodium hydroxide and subsequently hydrochloric acid to form an acicular titanium dioxide product.

Usually prior to coating of the particulate product it is preferred to mill the product to an appropriate particle size falling within that specified hereinbefore. Milling conveniently can be effected in a wet milling process employing a grinding medium such as sand which can be separated easily and effectively from the milled product. Milling, can be carried out in the presence of a dispersing agent such as sodium silicate or another dispersant, for example, an organic dispersant.

The particulate produced is then coated with the dense amorphous silica as described hereinafter.

The coated titanium dioxide product is separated from the aqueous dispersion in which it has been prepared and after washing is dried at an elevated temperature of say 70°C to 110°C. In contrast to the usual "sulphate" process for the production of pigmentary titanium dioxide no calcination of hydrous titania is carried out. Consequently it may be that some of the titania used to prepare the particulate product is present in a hydrous form even after drying.

Alternatively the particles of titania to be used in compositions of the present invention can be prepared by decomposition or hydrolysis of suitable titanium compounds. Typically high temperature hydrolysis of an organic titanium compound such as a titanium alkoxide can be used to produce the fine particle sized titania. Oxidation or hydrolysis in the vapour state of titanium halides under appropriate conditions can be also used to prepare the titania which is then coated.

The coating of dense silica is substantially non-porous, amorphous and continuous over the particle. The coating of dense silica is formed from an alkaline solution and preferably, from a solution of a soluble silicate at a pH greater than 8, most preferably at a pH of from 9 to 11.

The deposition of the dense silica results from the addition of a mineral acid such as sulphuric acid to a alkaline solution of the soluble silicate containing the dispersed titanium dioxide to hydrolyse the silicate in solution to dense amorphous silica. For instance a solution of a soluble silicate can be mixed with an alkaline slurry or dispersion of the particles of titanium dioxide to be coated and then slowly acidified to deposit dense amorphous silica.

Alternatively there can be added to a slurry or dispersion of the particles of titanium dioxide an alkaline solution of a water soluble silicate and simultaneously a mineral acid to maintain the pH of the slurry at a value greater than 8, say 9 to 10.5 to form and deposit the required dense silica coating. Generally the temperature of the slurry is maintained at from 60°C to 100°C, preferably from 70°C to 90°C during deposition of dense amorphous silica and the slurry will be stirred to maintain effective coating.

Any suitable water soluble silicate can be used as the source of dense amorphous silica although preferably an alkali metal silicate is employed. Particularly useful are sodium and potassium silicates and also the solution of the silicate is freshly prepared.

The film-forming polymer, and other ingredients of the composition according to the present invention can be dispersed in a suitable liquid vehicle, if desired, and the liquid can be water or an organic liquid such as a solvent for the film-forming polymer. Typical solvents or liquid vehicles which may be used depend on the particular polymer and on the particular use to which the composition is to be put. Typical volatile organic solvents are aliphatic, cycloaliphatic or aromatic hydrocarbons, esters, ethers, ketones and alcohols e.g. toluene, xylene, butyl acetate, acetone, methyl isobutyl ketone, butyl alcohol, cellulose esters such as nitrates and white spirit or turpentine.

Various amounts of the ingredients of the compositions of the invention can be used depending on the particular form of composition and its application. Usually however a composition will contain from 15 per cent by weight to 50 per cent by weight of the film-forming polymer and from 20% to 40% by weight preferably. Amounts of solvent or other liquid dispersant will usually range from 5% to 40% by weight of the composition. The amounts of the titanium dioxide powder coated with dense silica is relatively small and is from 0.5% to 10% by weight of the composition, preferably from 0.5 to 2% by weight. The compositions usually contain metallic or metallic-like pigments in amounts of from 0.5% to 20% by weight preferably from 1.0% to 15% by weight.

Compositions of the present invention can also contain any other conventional ingredient such as a viscosity control agent and cross-linking agent for a thermosetting resin system.

Coating compositions can be manufactured using any appropriate conventional techniques and applied by spraying or otherwise to the surface to be coated. As stated the compositions can be used as base coats, intermediate coats or as a final coating and when used as a sub-coating will be associated with clear varnishes or finishes as appropriate or as a varnish or finish itself. As stated any composition of the invention also can contain a coloured pigment or dye.

The invention is illustrated by the following Examples.

### Example 1

Ilmenite was digested with concentrated sulphuric acid. The digestion cake obtained was dissolved in water to form a crude liquor containing iron and titanium sulphates and some suspended insoluble matter. Any iron present in the ferric form was reduced chemically prior to filtering insoluble matter. The liquor after any necessary crystallisation and filtration was concentrated by vacuum treatment and then hydrolysed to precipitate hydrous titanium dioxide by boiling and addition of any necessary reaction agent. The product on filtering was a pulp of uncoated hydrous TiO₂.

In the subsequent process any water added or used was taken to be demineralised water.

The pulp of the uncoated hydrous TiO₂ obtained was diluted to a concentration of 280 grams per litre TiO₂ and a sample amount of 2.5 litres taken and heated to 60°C. Aqueous sodium hydroxide solution containing 700 grams per litre NaOH in an amount of 1.5 litres was heated to 90°C and then transferred to a reaction flask having a volume of 5 litres fitted with a condenser. The hot diluted pulp was added over a period of 30 minutes to the reaction flask whilst agitating the contents vigorously and the mixture temperature was held at 117°C whilst agitating for a period of 2 hours after the addition had been completed. Cold water was added to quench the solution in the flask to 90°C and to decrease the concentration of titanium dioxide to 140 grams per litre. The amount of water added was approximately 20% of the total volume achieved. The contents were agitated for a further 15 minutes at this temperature of 90°C prior to cooling to a temperature of 50 to 55°C by the addition of a further amount of cold water which reduced the concentration of titanium dioxide to about 80 to 90 grams per litre. The dispersion was filtered and the filter cake washed with warm water at a temperature of 50°C to 60°C so that the filtrate contained less than 1500 ppm Na₂O. The washed filter cake was then reslurried in water to a concentration of 200 grams per litre TiO₂ and at this stage the product was sodium titanate.

Two litres of the washed sodium titanate was added to a reaction flask having a volume of 6 litres and fitted with a condenser. The pH of the dispersion in the flask was reduced to a value within the range 2.8 to 3.1 by the addition of aqueous hydrochloric acid (30% w/w) and the mixture then heated to a temperature of 60°C at the rate of 1°C per minute. The pH of the mixture was rechecked and adjusted if necessary, to a value within the range 2.8 to 3.1 by a further addition of the aqueous hydrochloric acid. The dispersion was held at this temperature for 30 minutes whilst agitated. A further quantity of hydrochloric acid was then added such that the volume added was 0.754 litres of 30% HCl acid per kilogram of TiO₂ in the dispersion such that the ratio of HCl/TiO₂ equalled 0.26. The slurry was then heated to the boiling point over a period of 40 minutes and held at the boiling point for a period of 90 minutes whilst being agitated. The treated product was then quenched by addition of two litres of water and the dispersion had a pH value of 0.4. Sodium hydroxide solution at a concentration of 400 grams per litre NaOH was then added to neutralise the dispersion to a pH of 7.5 and approximately 460 ml of the aqueous sodium hydroxide was required. The dispersion was filtered and the filter cake washed with two litres of water. The washed filter cake was then redispersed with a further quantity of two litres of water and filtered again to produce a filter cake having a solids content of 34% by weight.

882 grams of the filter cake (300 grams TiO₂) was diluted to a concentration of 100 grams per litre TiO₂ with demineralised water and mixed with sodium silicate in an amount equivalent to 5% by weight SiO₂ on weight of TiO₂ and milled in a sand mill for 2 hours after adjusting the pH of the dispersion to 10.0 to 11.5 with aqueous sodium hydroxide. The grinding medium was Ottowa sand and was removed from the milled dispersion at the end of the milling period by filtration.

The aqueous dispersion after removal of the sand had a pH of 9.4 and was heated to 70°C and maintained at this during the coating operation.

To the stirred dispersion aqueous sodium silicate solution (150 grams per litre SiO₂ equivalent) was added dropwise in an amount sufficient to introduce sodium silicate in an amount equivalent to 90% SiO₂ on weight of TiO₂ over a period of 5 hours. At the same time sulphuric acid was co-added in order to maintain the overall pH of the solution between 8.5 - 9.5. Approximately 3067 mls of sodium silicate solution and 1084 mls H₂SO₄ were added. After the addition had been completed the dispersion had a pH of 8.5 and was allowed to age for 30 minutes at 70°C whilst stirring was maintained.

Sulphuric acid (10%) was added to the aqueous dispersion to reduce the pH to 7.0. the neutralised dispersion was aged for 30 minutes whilst being stirred. The dispersion was filtered to produce a filter cake of the coated product which was then washed with 1 litre of demineralised water. The cake was redispersed in 1 litre of demineralised water, refiltered and then washed again with demineralised water.

The product was dried overnight at 110°C. The product was acicular rutile titanium dioxide having an average size of 0.02 x 0.10 microns with a coating of dense amorphous SiO₂ in an amount equivalent to 90% on TiO₂.

A dispersion of the titanium dioxide coated with dense amorphous silica, was prepared by ball milling a charge comprising 21.70 parts of titanium dioxide with 58.77 parts of a 20% alkyd resin solution. The solvent used for the resin solution was 4 parts xylene to 1 part butanol. After ball milling for 24 hours the dispersion was completed with the addition of 19.53 parts of melamine formaldehyde resin.

The dispersion was then used to make up the following paints. A resin solution of 45.0 parts alkyd resin, 15 parts melamine formaldehyde resin, 30 parts xylene and 10 parts butanol was used as the medium for paint preparation. 92.34 parts of the resin solution was mixed with 6.91 parts of the titanium dioxide dispersion. To this was added 0.75 parts of aluminium paste (Silberline Sparkle Silver 5242-AR). After thoroughly stirring the mixture it was allowed to trundle on rollers for 2 hours. The paint was thinned to 0.5 poise with a 4:1 blend of xylene:butanol and sprayed to an approximate thickness of 50 microns on a metal panel. The solvents were allowed 30 minutes to flash off prior to stoving for 30 minutes at 150°C.

A clear layer was also used with this finish and was applied wet-on-wet 2 minutes after spraying the metallic/titanium dioxide basecoat.
- Basecoat total pigment: : binder = 0.035:1
- titanium dioxide: : binder = 0.027:1
- aluminium flake: : binder = 0.008:1

### Example 2

The finish described in Example 1 was also be used over a high chroma groundcoat to give a novel colouring effect. The metallic/titanium dioxide finish gives variations in chromaticity as the angle of observation is changed. When sprayed over a blue groundcoat the face colour is a silver blue which becomes an intense blue at low angles of observation.

### Example 3

Coloured pigments were also included in the coating described in Example 1. The use of a blue pigment at levels of 0.05% resulted in a similar effect to that described in Example 2.

### Example 4

A similar colour change with viewing angle was achieved by including the titanium dioxide in a clearcoat over a metallic finish containing aluminium flake at a pigment:binder ratio of 0.02:1. The clearcoat was made up as in Example 1, but excluding the aluminium addition, and applied wet-on-wet over the aluminium basecoat. The combined finish was stoved for 30 minutes at 150°C after allowing 30 minutes for the solvents to flash off.

## Claims

1. A film-forming coating composition comprising a film-forming polymer, a liquid dispersion medium, a metallic or metallic-like pigment and particulate material comprising particles of titanium dioxide having an average size of from 0.01 to 0.15 micron characterised in that the particles of titanium dioxide have a coating of dense amorphous silica, the amount of said particles present is from 0.5 to 10 per cent by weight of the composition and at least 80 per cent by weight of said particles have a size within the range 0.01 to 0.15 micron.

2. A composition according to claim 1 characterised in that the metallic pigment is aluminium flake.

3. A composition according to claim 1 or 2 characterised in that the particles of titanium dioxide are spherical and have a diameter within the range 0.01 to 0.03 micron.

4. A composition according to claim 1 or 2 characterised in that the particles of titanium dioxide are acicular in shape having a largest dimension within the range 0.01 to 0.15 micron and having a ratio of the largest dimension to the shortest dimension of from 8:1 to 2:1.

5. A composition according to any one of the preceding claims characterised in that the particles are coated with dense amorphous silica in an amount of at least 10 per cent by weight expressed as SiO₂ on weight of TiO₂.

6. A composition according to claim 5 characterised in that the amount of dense amorphous silica present as coating is up to 150 per cent by weight expressed as SiO₂ on weight of TiO₂.

7. A composition according to claim 5 or 6 characterised in that the amount of dense amorphous silica is from 20 per cent to 115 per cent by weight expressed as SiO₂ on weight of TiO₂.

8. A composition according to any one of the preceding claims characterised in that the film-forming polymer is an acrylic resin, an alkyd resin, a polyester, a polyurethane or an aminoplast resin.

9. A composition according to any one of the preceding claims characterised in that there is present from 15 to 50 per cent by weight of the composition of said film-forming polymer.

10. A composition according to any one of the preceding claims characterised in that the amount of the metallic or metallic-like pigment is from 0.5 to 20 per cent by weight of the composition.

11. A composition according to any one of the preceding claims characterised in that the liquid dispersion medium is present in an amount of from 5 to 40 per cent by weight of the composition.

## Patentansprüche

1. Filmbildende Beschichtungszusammensetzung, welche ein filmbildendes Polymer, ein flüssiges Dispersionsmedium, ein metallisches oder Metall-ähnliches Pigment und ein disperses Material enthält, wobei das disperse Material Titandioxidteilchen mit einer durchschnittlichen Größe von 0,01 bis 0,15 µm enthält, dadurch gekennzeichnet, daß die Titandioxidteilchen eine Beschichtung aus dichtem amorphem Siliziumdioxid aufweisen und die Menge der vorhandenen Teilchen 0,5 bis 10 Gew.-% der Zusammensetzung ausmacht und mindestens 80 Gew.-% der Teilchen eine Größe im Bereich von 0,01 bis 0,15 µm besitzen.

2. Zusammensetzung nach Anspruch 1, dadurch gekennzeichnet, daß das metallische Pigment Aluminiumplättchen sind.

3. Zusammensetzung nach Anspruch 1 oder 2, dadurch gekennzeichnet, daß die Titandioxidteilchen spherisch sind und einen Durchmesser im Bereich von 0,01 bis 0,03 µm besitzen.

4. Zusammensetzung nach Anspruch 1 oder 2, dadurch gekennzeichnet, daß die Titandioxidteilchen eine nadelförmige Gestalt mit den größten Abmessungen innerhalb des Bereiches von 0,01 bis 0,15 µm besitzen und ein Verhältnis der größten Ausdehnung zu der kleinsten Ausdehnung von 8:1 bis 2:1 aufweisen.

5. Zusammensetzung nach einem der vorhergehenden Ansprüche, dadurch gekennzeichnet, daß die Teilchen mit dichtem amorphem Siliziumdioxid in einer Menge von wenigstens 10 Gew.-%, ausgedrückt als SiO₂, bezogen auf das Gewicht von TiO₂, beschichtet sind.

6. Zusammensetzung nach Anspruch 5, dadurch gekennzeichnet, daß die Menge des als Beschichtung vorhandenen dichten amorphen Siliziumdioxids bis zu 150 Gew.-% ausgedrückt als SiO₂, bezogen auf das Gewicht von TiO₂, beträgt.

7. Zusammensetzung nach Anspruch 5 oder 6, dadurch gekennzeichnet, daß die Menge des dichten amorphen Siliziumdioxids 20 Gew.-% bis 115 Gew.-% ausgedrückt als SiO₂, bezogen auf das Gewicht von TiO₂, beträgt.

8. Zusammensetzung nach einem der vorhergehenden Ansprüche , dadurch gekennzeichnet, daß das filmbildende Polymer ein Acryl-Harz, ein Alkyd-Harz, ein Polyester, ein Polyurethan oder ein Aminoplast-Harz ist.

9. Zusammensetzung nach einem der vorhergehenden Ansprüche, dadurch gekennzeichnet, daß das filmbildende Polymer 15 bis 50 Gew.-% der Zusammensetzung ausmacht.

10. Zusammensetzung nach einem der vorhergehenden Ansprüche, dadurch gekennzeichnet, daß die Menge des metallischen oder Metall-ähnlichen Pigmentes 0,5 bis 20 Gew.-% der Zusammensetzung beträgt.

11. Zusammensetzung nach einem der vorhergehenden Ansprüche, dadurch gekennzeichnet, daß das flüssige Dispersionsmedium in einer Menge von 5 bis 40 Gew.-% der Zusammensetzung vorhanden ist.

## Revendications

1. Composition de revêtement filmogène comprenant un polymère filmogène, un milieu de dispersion liquide, un pigment métallique ou de type métallique et un produit particulaire comprenant des particules de dioxyde de titane ayant une dimension moyenne comprise entre 0,01 et 0,15 µm, caractérisée en ce que les particules de dioxyde de titane comportent un revêtement de silice amorphe dense, la quantité desdites particules présente est de 0,5 à 10 % en poids de la composition, et au moins 80 % en poids desdites particules ont une dimension comprise dans l'intervalle de 0,01 à 0,15 µm.

2. Composition selon la revendication 1, caractérisée en ce que le pigment métallique est constitué de flocons d'aluminium.

3. Composition selon la revendication 1 ou 2, caractérisée en ce que les particules de dioxyde de titane sont sphériques et ont un diamètre compris dans l'intervalle de 0,01 à 0,03 µm.

4. Composition selon la revendication 1 ou 2, caractérisée en ce que les particules de dioxyde de titane ont une forme aciculaire dont la dimension la plus longue est comprise dans l'intervalle de 0,01 à 0,15 µm et dont le rapport de la dimension la plus longue par rapport à la dimension la plus courte est de 8:1 à 2:1.

5. Composition selon l'une quelconque des revendications précédentes, caractérisée en ce que les particules sont revêtues de silice amorphe dense en une quantité d'au moins 10 % en poids exprimé sous la forme SiO₂ par rapport au poids de TiO₂.

6. Composition selon la revendication 5, caractérisée en ce que la quantité de silice amorphe dense présente en tant que revêtement s'élève jusqu'à 150 % en poids exprimé sous la forme SiO₂ par rapport au poids de TiO₂.

7. Composition selon la revendication 5 ou 6, caractérisée en ce que la quantité de silice amorphe dense est comprise entre 20 % et 115 % en poids exprimé sous la forme SiO₂ par rapport au poids de TiO₂.

8. Composition selon l'une quelconque des revendications précédentes, caractérisée en ce que le polymère filmogène est une résine acrylique, une résine alkyde, une résine polyester, polyuréthanne ou aminoplaste.

9. Composition selon l'une quelconque des revendications précédentes, caractérisée en ce qu'il y a de 15 à 50 % en poids dudit polymère filmogène par rapport au poids de la composition.

10. Composition selon l'une quelconque des revendications précédentes, caractérisée en ce que la quantité de pigment métallique ou de type métallique est comprise entre 0,5 et 20 % en poids de la composition.

11. Composition selon l'une quelconque des revendications précédentes, caractérisée en ce que le milieu de dispersion liquide est présent en une quantité de 5 à 40 % en poids de la composition.
